# EUROPÄISCHE PATENTSCHRIFT

(11) **EP 4 091 921 B1**
(45) Veröffentlichungstag und Bekanntmachung des Hinweises auf die Patenterteilung: **04.06.2025**
(21) Anmeldenummer: 22170526.2
(22) Anmeldetag: 28.04.2022
(51) Int. Cl.: B62D 35/00, B62D 37/02

(54) **STRÖMUNGSLEITVORRICHTUNG FÜR EIN KRAFTFAHRZEUG**
FLOW GUIDANCE DEVICE FOR A MOTOR VEHICLE
DISPOSITIF DE CONDUITE D'ÉCOULEMENT POUR UN VÉHICULE AUTOMOBILE

(30) Priorität: 18.05.2021 DE 102021205050
(43) Veröffentlichungstag der Anmeldung: 23.11.2022
(73) Patentinhaber: Magna Car Top Systems GmbH, 74321 Bietigheim-Bissingen (DE)
(72) Erfinder: ROSOK, Urs-Patrick, 71638 Ludwigsburg (DE)
(74) Vertreter: Reuter, Silke Beatrix

(56) Entgegenhaltungen:
- DE-A1- 10 309 369
- DE-A1- 102013 106 400
- DE-A1- 102020 121 746
- DE-C2- 4 207 658

## Beschreibung

Die vorliegende Erfindung betrifft eine Strömungsleitvorrichtung für ein Kraftfahrzeug.

Derartige Strömungsleitvorrichtungen sind in einer Vielzahl von Ausführungsformen bekannt und werden allgemein auch als "Spoiler" bezeichnet. Beispielsweise ist eine derartige Strömungsleitvorrichtung aus der DE 103 09 369 A1 bekannt. Diese umfasst einen im Heckbereich eines Kraftfahrzeugs angeordneten Spoiler, der mittels einer Aufstellmechanik zwischen einer Ruhestellung, in der er im Wesentlichen innerhalb der Fahrzeugkontur liegt, und einer Betriebsstellung, in der er die Fahrzeugkontur überragt, verstellbar ist. Die Verstellmechanik ist derart ausgeführt, dass bei der Ausstellbewegung des Spoilers Translations- und Rotationsanteile überlagert werden, so dass der Spoiler in der Betriebsstellung vorteilhaft eine zur Fahrzeugkontur beabstandete Lage einnimmt. Allerdings erlaubt diese bekannte Verstellmechanik nur einen recht geringen Ausstellwinkel des Spoilers (bezüglich dessen Ruhestellung).

Das Dokument DE 10 2020 121 746 A1 zeigt eine bekannte Ausführungsform einer Strömungsleitvorrichtung mit einer Antriebseinrichtung. Die Antriebseinrichtung weist einen Antriebsmotor und zumindest eine Lenkeranordnung auf.

Bekanntlich können durch einen solchen Spoiler z. B. die aerodynamischen Eigenschaften eines Kraftfahrzeugs und damit das Fahrverhalten vorteilhaft beeinflusst werden. Insbesondere kann bei höheren Geschwindigkeiten die Bodenhaftung des Fahrzeugs durch eine Abtriebswirkung des Spoilers vergrößert werden.

Des Weiteren ist aus der DE 200 01 695 U1 ein Heckspoiler bekannt, der beispielsweise in Kopplung mit dem Bremssystem des Automobils in eine Stellung hohen Luftwiderstands gebracht werden kann, um als eine "Luftbremse" zu wirken, so dass die Wirkung herkömmlicher Bremsen verstärkt wird. Die Ausstellbewegung des Spoilers ist als eine einfache Verschwenkung um eine in Fahrzeugquerrichtung sich erstreckende Schwenkwelle vorgesehen. Die Kopplung des Spoilers mit dem Bremssystem kann dabei durch eine hydraulische Schaltung realisiert sein.

Aus der DE 10 2013 106 400 A1 ist ein Heckspoiler für ein Kraftfahrzeug bekannt, der einen Spoilerkörper zur Umlenkung eines Luftstroms für die Bereitstellung eines aerodynamischen Effekts und einer Verstellkinematik zur Verlagerung des Spoilerkörpers zwischen einer Ablageposition und einer Nutzposition aufweist. Der Spoilerkörper ist zweigeteilt ausgeführt und umfasst einen Hauptspoiler und einen mit Hilfe der Verstellkinematik relativ zu dem Hauptspoiler bewegbaren Hilfsspoiler.

Des Weiteren ist aus der DE 42 07 658 C2 eine Strömungsleitvorrichtung für den Heckbereich eines Kraftfahrzeugs bekannt, bei dem ein aus einer Ruheposition im Fahrzeugheck ausfahrbares Luftleitprofil durch Verstellen des Anstellwinkels in der Wirkposition geändert werden kann. Eine Veränderung der luftwiderstandsrelevanten Querschnittsfläche des Luftleitprofils wird hierbei durch eine Verstellanordnung erreicht, die ein kinematisches Additionsgetriebe umfasst. Dieses kinematische Additionsgetriebe gestattet sowohl ein Ausfahren des Luftleitprofils aus seiner Ausgangsstellung im Heck des Kraftfahrzeugs als auch ein Verstellen des Anstellwinkels des gesamten Luftleitprofils in dessen Wirkposition.

Nachteilig an dieser bekannten Strömungsleitvorrichtung ist es, dass die Ausfahrhöhe stark begrenzt ist und der Spoiler bzw. das Luftleitprofil seine ausgestellte Position in Fahrtrichtung gesehen tendenziell hinter dem Heckbereich des Kraftfahrzeugs erreicht. Ferner sind nur eingeschränkte Positionen mit dieser Lösung zu erreichen.

Vor diesem Hintergrund stellt sich die vorliegende Erfindung die Aufgabe, eine Strömungsleitvorrichtung für den Heckbereich eines Kraftfahrzeugs derart weiterzubilden, dass bei einer kompakten Bauform und Integration in den beweglichen Kofferraumdeckel eine Vielzahl von Betriebsstellungen des Spoilers einstellbar sind, wobei zumindest eine Betriebsstellung die Funktion einer Luftbremse erfüllen soll.

Diese Aufgabe löst die vorliegende Erfindung durch eine Strömungsleitvorrichtung für ein Kraftfahrzeug mit den in Patentanspruch 1 angegebenen Merkmalen.

Die Erzielung der Vielzahl von Betriebsstellungen des Spoilers wird durch die Verstellkinematik erreicht, die zwei Viergelenkanordnungen umfasst. Dabei ist die erste Viergelenkanordnung zur Einstellung der Aufstellhöhe ansteuerbar und die zweite Viergelenkanordnung ist zur Einstellung der Neigung, der nachfolgend als Anstellwinkel bezeichnet wird, verantwortlich. Die erste und die zweite Viergelenkanordnung werden jeweils durch eine Steueranordnung unabhängig voneinander in die zugeordnete Position der gewünschten Betriebsstellung verstellt.

Durch die erfindungsgemäße Ausführung der zweiten Verstellkinematik, die einen Zweischlag mit einem ersten und einem zweiten Zweischlaglenker umfasst, lässt sich weiterhin eine überstreckte Betriebsstellung zwischen dem ersten und zweiten Zweischlaglenker mit einem Winkel über 180 Grad verstellen, wodurch eine Kraftminimierung und Positionssicherung insbesondere für die Bremsstellung erreicht wird.

Die Verstellkinematikeinrichtung 20 ist derart ausgelegt, dass der Spoilerdrehpunkt ausgehend von der Ruhestellung bis in die fünfte Funktionsstellung sich auf dem Koppellenker der ersten Verstellkinematik befindet. Diese ist wie bereits erläutert als Viergelenk ausgeführt, so dass beliebige Zwischenpositionen möglich sind. Die Bahnkurve kann entsprechend durch die Auslegung des Viergelenks angepasst werden, was eine hohe Variabilität in den Aerodynamikeinstellungen des Spoilers ermöglicht.

Die Winkeleinstellung des Spoilers kann über einen lagerfest angeordneten Zweischlag erreicht werden. Hierdurch wird die Komplexität und die Kosten für die Winkeleinstellung reduziert.

Die Verstellung der ersten und zweiten Viergelenkanordnung erfolgt dabei über unabhängig voneinander ansteuerbare Elektromotoren. Hierfür sind sowohl der ersten als auch der zweiten Viergelenkanordnung jeweils ein Elektromotor zugeordnet.

Vorteilhafterweise sind die Elektromotoren selbsthemmend ausgeführt. Alternativ können die Elektromotoren mit einer zusätzlichen Bremseinheit ausgestattet sein. Hierdurch wird bei der Ausführung der Strömungsleitvorrichtung kein mechanischer Anschlag benötigt.

Die aktuelle Winkelposition der Elektromotoren wird über Hall-Sensoren erfasst. Anschließend die erfasste Winkelposition an eine Steuereinheit übermittelt und dort mit abgelegten Sollpositionen des Winkels verglichen und in Abhängigkeit des Ist/Sollvergleichs über die Elektromotoren nachgeführt.

Vorteilhafterweise wird die kompakte Bauform durch die Integration der Strömungsleitvorrichtung in die Heckklappe des Kraftfahrzeugs erreicht.

Die nachfolgendend genannten Achsen entsprechen den Achsen eines Fahrzeugkoordinatensystems. Die x- Achse entspricht demnach der Längsrichtung des Kraftfahrzeugs, die y-Achse der Querrichtung und die z-Achse der Hochrichtung.

Die Erfindung wird nachfolgend anhand der Zeichnungen beschrieben.

Es zeigt:
- Fig. 1: eine schematische Seitenansicht eines Kraftfahrzeugs mit in die Heccklappe integrierter Strömungsleitvorrichtung in einer Stellung in der die Strömungsleitvorrichtung in einer maximal aufgestellten Funktionsstellung ist,
- Fig. 2: eine schematische Seitenansicht der Strömungsleitvorrichtung in der Ruhestellung,
- Fig. 3a-d: die Strömungsleitvorrichtung in der Ruhestellung in unterschiedlichen perspektivischen Ansichten,
- Fig. 4: eine schematische Seitenansicht der Strömungsleitvorrichtung in einer ersten Funktionsstellung,
- Fig. 5: eine schematische Seitenansicht der Strömungsleitvorrichtung in einer zweiten Funktionsstellung,
- Fig. 6: eine schematische Seitenansicht der Strömungsleitvorrichtung in einer dritten Funktionsstellung,
- Fig. 7: eine schematische Seitenansicht der Strömungsleitvorrichtung in einer vierten Funktionsstellung; und
- Fig. 8: eine schematische Seitenansicht der Strömungsleitvorrichtung in einer fünften Funktionsstellung, die einer maximal ausgefahrenen Funktionsstellung des Spoilers entspricht.

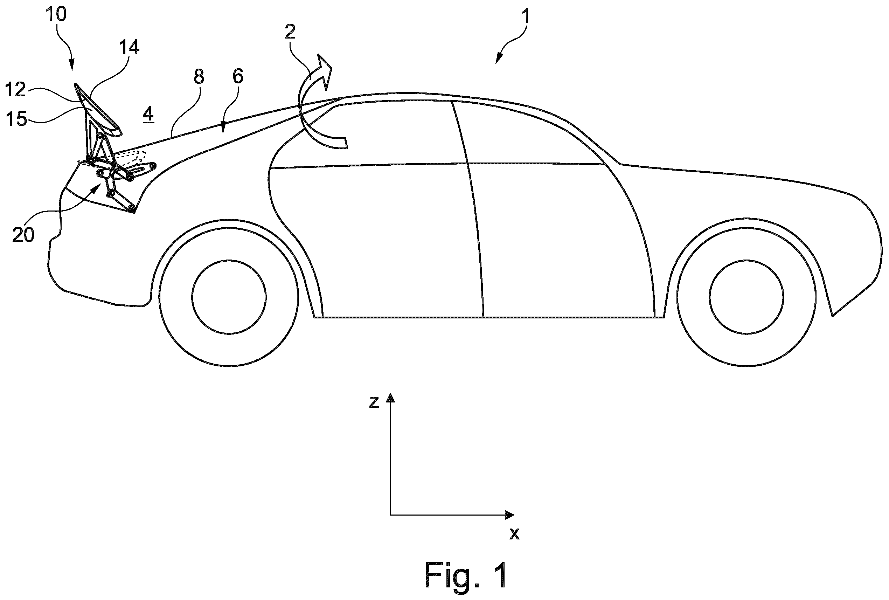

Fig. 1 zeigt eine schematische Seitenansicht eines Kraftfahrzeugs 1 mit im Heckbereich 4 vorgesehener Strömungsleitvorrichtung 10. Das Kraftfahrzeug 1 weist im Heckbereich 4 eine um eine Querachse in eine Beladestellung verschwenkbare Heckklappe 6 auf, die eine nach außen weisende Fahrzeugoberfläche 8 aufweist. Die Verschwenkmöglichkeit der Heckklappe 6 ist durch den Pfeil 2 dargestellt.

Die Strömungsleitvorrichtung 10 ist in die Heckklappe 6 integriert angeordnet und umfasst einen tragflügelartigen Spoiler 12 der als Luftleitprofil ausgebildet ist und der sich nahezu über die gesamte Heckklappe 6 in Querrichtung erstreckt. Des Weiteren umfasst die Strömungsleitvorrichtung 10 eine Verstellkinematikeinrichtung 20 und ansteuerbare Antriebsmittel die als Elektromotoren 60, 61 ausgeführt sind.

Bei einem Verschwenken der Heckklappe 6 in die Beladestellung, schwenkt die Strömungsleitvorrichtung 10 mit der Heckklappe 6.

Die Strömungsleitvorrichtung 10 kann grundsätzlich ausgehend von einer in der Fahrzeugkontur/Heckklappe abgesenkten Ruhestellung mittels der Verstellkinematikeinrichtung 20 in eine komplett ausgefahrene Funktionsstellung ausgestellt werden. In der abgesenkten Ruhestellung ist die nach außen weisende Oberseite 14 des tragflügelartigen Spoilers 12 bündig zu der Fahrzeugkontur bzw. der Fahrzeugoberfläche 8 der Heckklappe 6. Der Spoiler 12 weist eine zur Oberseite 14 gegenüberliegende Unterseite 15 auf.

Die Figur 1 zeigt die Strömungsleitvorrichtung 10 in einer maximal ausgefahrenen Funktionsstellung, in der sich der tragflügelartige Spoiler 12 in einer über der Fahrzeugkontur angehobenen, verschwenkten Stellung befindet. In dieser Funktionsstellung wird eine Bremswirkung erreicht.

Es ist selbstverständlich, dass auch jede beliebige Zwischenstellung des Spoilers 12 eingestellt werden kann.

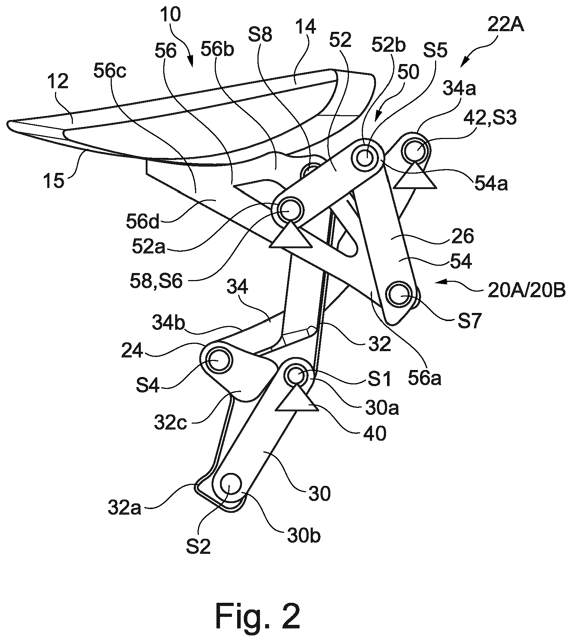

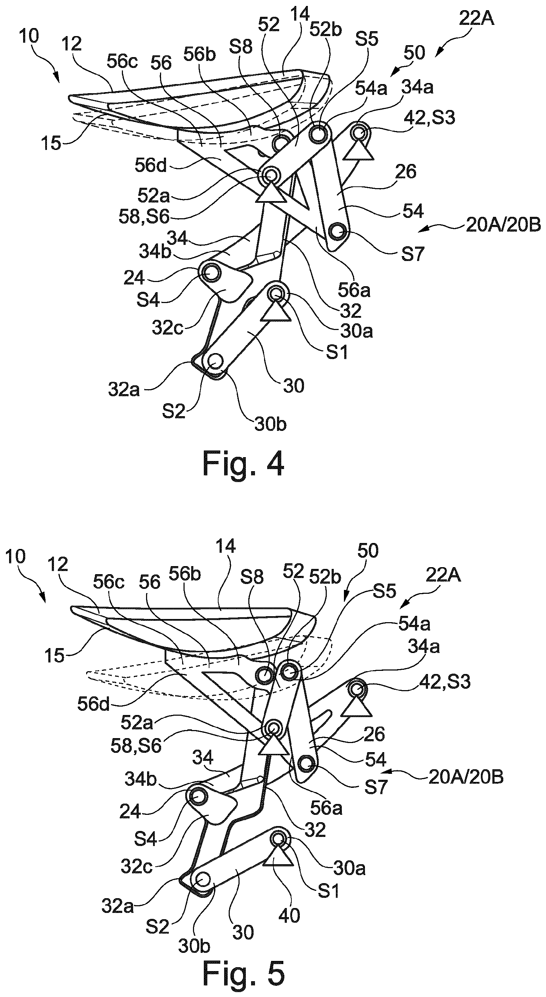

Die Ausstellbewegung des Spoilers 12 aus seiner in der Figur 2 dargestellten Ruhestellung in die in den Figuren 4 - 8 gezeigten Funktionsstellungen ist eine aus einer Translation und einer Rotation zusammengesetzte Bewegung.

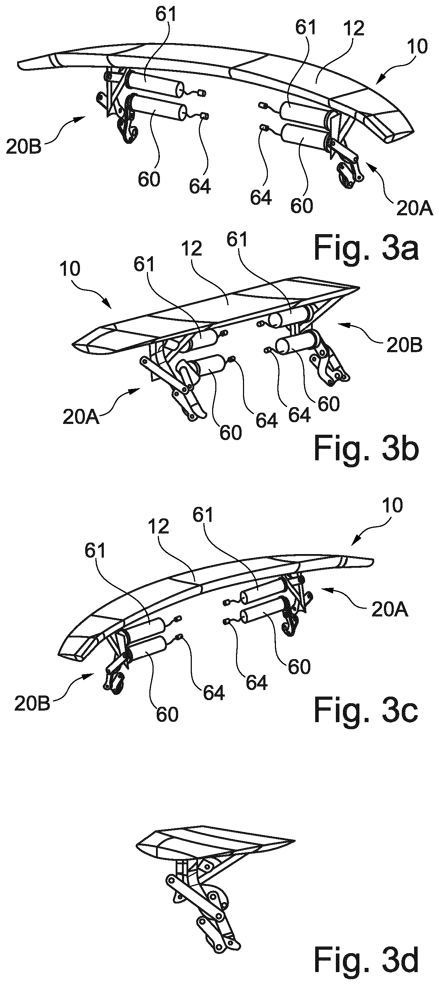

Wie es aus den perspektivischen Darstellungen der Figuren 3a - 3d zu ersehen ist, weist die zum Verstellen des Spoilers 12 zwischen der Ruhestellung und den Funktionsstellungen eingesetzte Verstellkinematikeinrichtung 20 zwei in Fahrzeugquerrichtung voneinander beabstandet angeordnete Verstellkinematikeinheiten 20A und 20B auf. Die Verstellkinematikeinheiten 20A und 20B im dargestellten Ausführungsbeispiel sind spiegelsymmetrisch ausgebildet. Es wird daher nachfolgend nur eine Verstellkinematikeinheit beschrieben.

In den Fig. 2 und Fig. 4 bis Fig. 8 ist die Seitenansicht der Verstellkinematikeinheit 20A der Fahrerseite des Kraftfahrzeugs 1 dargestellt. Die Funktion und die Einzelteile werden anhand der Verstellkinematikeinheit 20A beschrieben.

Die Verstellkinematikeinheit 20A besteht aus einer ersten und zweiten Verstellkinematik 24, 26 die wie nachfolgend näher erläutert wirkverbunden miteinander gekoppelt sind.

Die erste Verstellkinematik 24 ist als Viergelenkanordnung (S1, S2, S3, S4) ausgeführt und bewirkt bei einer entsprechenden Ansteuerung und Verstellung die Einstellung der Höhe in z-Richtung des Spoilers 12.

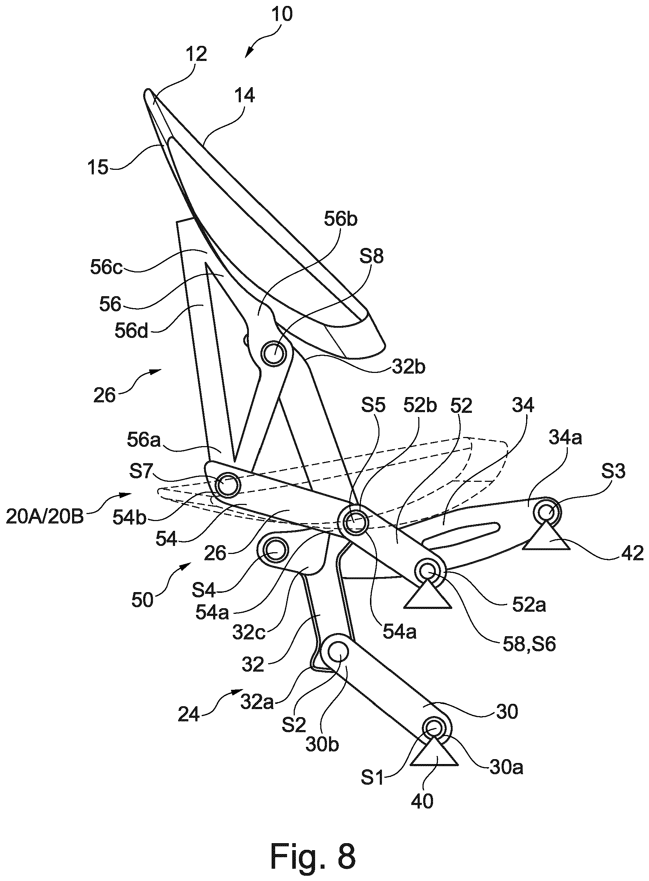

Die zweite Verstellkinematik 26 ist als Viergelenkanordnung (S5, S6, S7, S8), welche einen Zweischlag umfasst, ausgeführt und bewirkt bei einer entsprechenden Ansteuerung und Verstellung die Einstellung des Winkels des Spoilers 12. Hierbei wird von einem Winkel α = 0 Grad in der Ruhestellung ausgegangen. In der in der Figur 8 gezeigten maximal aufgestellten Funktionsstellung entspricht der Winkel α in etwa 55 Grad. Die Aufstellhöhe beträgt ca. 150mm. In dieser Funktionsstellung wird eine Bremsfunktion mittels des Spoilers 12 erreicht.

Die erste Verstellkinematik 24 umfasst dabei:
- einen ersten Schwenklenker 30 mit einem ersten Endbereich 30a und einem zweiten Endbereich 30b
- einen Koppellenker 32, der in einem mittleren Bereich gekröpft ausgebildet ist, mit einem ersten Endbereich 32a, einem zweiten Endbereich 32b und einem im mittleren Bereich ausgebildeten Anbindungsbereich 32c
- einen zweiten Schwenklenker 34 mit einem ersten Endbereich 34a und einem zweiten Endbereich 34b

Der erste Schwenklenker 30 ist an seinem ersten Endbereich 30a über ein lagerfest angeordnetes Schwenklager 40 schwenkbeweglich um eine Schwenkachse S1 gelagert. Das Schwenklager 40 ist dabei unmittelbar oder mittels eines Lagerbauteils an der Heckklappe 6 angebunden. Über seinen zweiten Endbereich 30b ist der erste Schwenklenker 30 schwenkbeweglich um eine Schwenkachse S2 an dem ersten Endbereich 32a des Koppellenkers 32 angebunden. Der zweite Schwenklenker 34 ist über seinen ersten Endbereich 34a über ein lagerfest angeordnetes Schwenklager 42 schwenkbeweglich um eine Schwenkachse S3 gelagert. Das Schwenklager 42 ist dabei unmittelbar oder mittels eines Lagerbauteils an der Heckklappe 6 angebunden. Über seinen zweiten Endbereich 34b ist der zweite Schwenklenker 34 schwenkbeweglich um eine Schwenkachse S4 an dem Anbindungsbereich 32c des Koppellenkers 32 angebunden.

Die zweite Verstellkinematik 26 umfasst dabei:
- einen Zweischlag 50 mit einem ersten Zweischlaglenker 52 mit einem ersten Endbereich 52a und einem zweiten Endbereich 52b und einen zweiten Zweischlaglenker 54 mit einem ersten Endbereich 54a und einem zweiten Endbereich 54b,
- ein Lenkhebelelement 56 mit einem ersten Endbereich 56a und einem Anbindungsbereich 56b.

Der Zweischlag 50 wird durch den ersten Zweischlaglenker 52 und den zweiten Zweischlaglenker 54 gebildet, hierfür sind der erste Zweischlaglenker 52 über seinen zweiten Endbereich 52b schwenkbeweglich um eine Schwenkachse S5 an dem ersten Endbereich 54a des zweiten Zweischlaglenker 54 angebunden.

Über seinen ersten Endbereich 52a ist der erste Zweischlaglenker 52 über ein lagerfest ausgeführtes Schwenklager 58 schwenkbeweglich um eine Schwenkachse S6 gelagert. Das Schwenklager 58 ist unmittelbar oder mittels eines Lagerbauteils an der Heckklappe 6 angebunden.

Der zweite Zweischlaglenker 54 ist über seinen zweiten Endbereich 54b schwenkbeweglich um eine Schwenkachse S7 an dem ersten Endbereich 56a des Lenkhebelelements 56 gelagert. Über seinen Anbindungsbereich 56b ist das Lenkhebelelement 56 mit dem zweiten Endbereich 32b des Koppellenkers 32 schwenkbeweglich um eine Schwenkachse S8 gekoppelt. Des Weiteren ist das Lenkhebelelement 56 über seinen Anbindungsbereich 56b an der Unterseite 15 des Spoilers fest angebunden.

Alle zuvor beschriebenen Schwenkachsen S1-S8 sind in einer Fahrzeugquerrichtung und parallel zueinander ausgerichtet.

Die zuvor beschriebene Ausführung der Verstellkinematikeinrichtung 20 ist derart ausgelegt, dass der Spoilerdrehpunkt ausgehend von der Ruhestellung bis in die fünfte Funktionsstellung sich auf dem Koppellenker 32 der ersten Verstellkinematik 24 befindet. Diese ist wie bereits erläutert als Viergelenk ausgeführt, so dass beliebige Zwischenpositionen möglich sind. Die Bahnkurve kann entsprechend durch die Auslegung des Viergelenks angepasst werden.

Eine Verstellbewegung der Verstellkinematikeinrichtung 20 ausgehend von der in der Figur 2 gezeigten Ruhestellung in die in den Figuren 4 - 8 dargestellten Funktionsstellungen wird über ansteuerbare Antriebsmittel erreicht.

Die ansteuerbaren Antriebsmittel sind als Elektromotoren 60 - 61 ausgeführt. Hierbei sind jeder Verstellkinematikeinheit 20A bzw. 20B jeweils ein Elektromotor 60 und 61 zugeordnet. Dies bedeutet, dass die Verstellkinematikeinrichtung 20 insgesamt vier Elektromotoren 60/61 umfasst. Wie es aus den perspektivischen Darstellungen der Figuren 2a - 2d zu erkennen ist, sind die Abtriebswellen der Elektromotoren 60 jeweils drehfest an den zugeordneten Schwenkachsen S1 der ersten Verstellkinematik 24 und die Abtriebswellen der Elektromotoren 61 jeweils drehfest der zugeordneten Schwenkachse S6 der zweiten Verstellkinematik 26 angebunden. Die Elektromotoren 60/61 umfassen jeweils separate elektrische Versorgungs- und Steuerleitungen 64. Auf eine Darstellung der zugeordneten Steuereinheit wird der Einfachheit halber verzichtet. Des Weiteren sind die Elektromotoren 60/61 selbsthemmend ausgeführt. Alternativ können die Elektromotoren 60/61 mit einer zusätzlichen Bremseinheit ausgeführt sein. Hierdurch kann auf einen mechanischen Endanschlag in der komplett ausgefahrenen Funktionsstellung, die in der Figur 8 gezeigt ist, verzichtet werden.

Fig. 2 veranschaulicht die Ruhestellung des Spoilers 12, der in diesem Zustand in einer Ausnehmung der Heckklappe 6 aufgenommen ist. Der Spoiler 12 ist an seiner Unterseite 15 mit einem Basiselement 56c des Lenkhebelelements 56 verbunden, beispielsweise einem Trägerkörper, der an der Unterseite des Spoilers 12 befestigt ist. An dem Basiselement 56c ist weiterhin eine Versteifungsstrebe 56d angeordnet, die sich an dem ersten Endbereich 56a des Lenkhebelelements 56 abstützt. In dieser Ruhestellung beträgt der Ausstellwinkel 0 Grad und die Ausstellhöhe 0 mm.

Fig. 4 veranschaulicht die erste Funktionsstellung, in welche der Spoiler 12 mittels der Verstellkinematikeinrichtung 20 über die Fahrzeugkontur bzw. die Oberfläche der Heckklappe 6 etwas ausgestellt wurde, um während der Fahrt in an sich bekannter Weise eine Abtriebswirkung bereitzustellen, oder die Aerodynamik des Kraftfahrzeugs 1 in sonstiger Weise (Geräusche, Windwiderstand, ...) zu verbessern und auf den Betriebszustand anzupassen. Diese erste Funktionsstellung wird nachfolgend daher auch als "erste Abtriebsstellung" bezeichnet. In der ersten Abtriebsstellung beträgt die Ausstellhöhe des Spoilers etwa 10mm und der Ausstellwinkel des Spoilers 12 (bezüglich der Ruhestellung) etwa 3 Grad.

Fig. 5 veranschaulicht die zweite Funktionsstellung, in welche der Spoiler 12 mittels der Verstellkinematikeinrichtung 20 über die Fahrzeugkontur bzw. die Oberfläche der Heckklappe 6 hinsichtlich der Höhe weiter ausgestellt wurde, um während der Fahrt in an sich bekannter Weise eine Abtriebswirkung bereitzustellen, durch welche die Bodenhaftung des Fahrzeugs 1 verbessert wird. Diese zweite Funktionsstellung wird nachfolgend daher auch als "zweite Abtriebsstellung" bezeichnet. In der zweiten Abtriebsstellung beträgt die Ausstellhöhe des Spoilers 12 etwa 40mm und der Ausstellwinkel des Spoilers 12 (bezüglich der Ruhestellung) etwa 10 Grad.

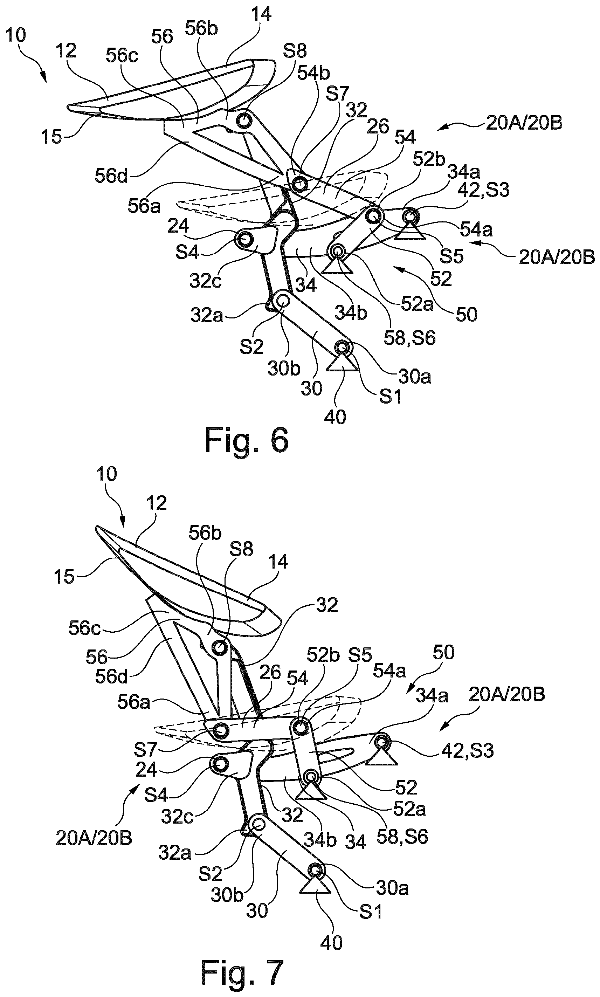

Fig. 6 veranschaulicht die dritte Funktionsstellung, in welche der Spoiler 12 mittels der Verstellkinematikeinrichtung 20 über die Fahrzeugkontur bzw. die Oberfläche der Heckklappe 6 hinsichtlich der Höhe noch weiter ausgestellt und gekippt wurde, um während der Fahrt in an sich bekannter Weise eine Abtriebswirkung bereitzustellen, durch welche die Bodenhaftung des Fahrzeugs 1 noch weiter verbessert wird. Diese dritte Funktionsstellung wird nachfolgend daher auch als "dritte Abtriebsstellung" bezeichnet. In der dritten Abtriebsstellung beträgt die Ausstellhöhe des Spoilers 12 etwa 150 mm und der Ausstellwinkel des Spoilers 12 (bezüglich der Ruhestellung) etwa -5 Grad.

Bei Überschreitung einer vorbestimmten Fahrgeschwindigkeit, die wesentlich größer als die oben genannte Fahrgeschwindigkeit ist, kann der Spoiler über die Verstellkinematikeinrichtung 20 weiter in die in der Figur 7 gezeigte vierte Funktionsstellung und ausgehend von der vierten Funktionsstellung, in die in der Figur 8 gezeigten fünften Funktionsstellung verstellt werden. In diesen in der Figur 8 gezeigten Funktionsstellungen wird der Spoiler 12 über die in den Fig. 4 - 7 gezeigten Stellungen hinaus weiter ausgestellt und weiter verdreht, um während der Fahrt eine Bremswirkung bereitzustellen.

In der in der Figur 7 gezeigten vierten Funktionsstellung beträgt die Ausstellhöhe in etwa 150 mm und der Ausstellwinkel des Spoilers 12 (bezüglich der Ruhestellung) etwa 35 Grad.

In der in der Figur 8 gezeigten fünften Funktionsstellung beträgt die Ausstellhöhe in etwa 150 mm und der Ausstellwinkel des Spoilers 12 (bezüglich der Ruhestellung) etwa 55 Grad.

### Bezugszeichenliste

- 1: Kraftfahrzeug
- 2: Pfeil
- 4: Heckbereich
- 6: Heckklappe
- 8: Fahrzeugoberfläche
- 10: Strömungsleitvorrichtung
- 12: Spoiler
- 14: Oberseite
- 15: Unterseite
- 20: Verstellkinematikeinrichtung
- 20A: Verstellkinematikeinheit
- 20B: Verstellkinematikeinheit
- 24: erste Verstellkinematik
- 26: zweite Verstellkinematik
- 30: erster Schwenklenker
- 30a: erster Endbereich
- 30b: zweiter Endbereich
- 32: Koppellenker
- 32a: erster Endbereich
- 32b: zweiter Endbereich
- 32c: Anbindungsbereich
- 34: zweiter Schwenklenker
- 34a: erster Endbereich
- 34b: zweiter Endbereich
- 40: Schwenklager
- 42: Schwenklager
- 50: Zweischlag
- 52: erster Zweischlaglenker
- 52a: erster Endbereich
- 52b: zweiter Endbereich
- 54: zweiter Zweischlaglenker
- 54a: erster Endbereich
- 54b: zweiter Endbereich
- 56: Lenkhebelelement
- 56a: erster Endbereich
- 56b: Anbindungsbereich
- 56c: Basiselement
- 56d: Versteifungsstrebe
- 58: Schwenklager
- 60: Elektromotor
- 61: Elektromotor
- 64: Versorgungs-/Steuerleitung

- S1-S8: Schwenkachsen

## Patentansprüche

1. Strömungsleitvorrichtung (10) eines Kraftfahrzeugs (1), umfassend einen an einer Heckklappe (6) des Kraftfahrzeugs befestigten Spoiler (12), sowie eine Verstellkinematikeinrichtung (20) zum Verstellen des Spoilers (12) zwischen einer Ruhestellung, in der der Spoiler (12) flächenbündig in der Heckklappe (6) angeordnet ist und zumindest einer Funktionsstellung, in welcher der Spoiler über die Fahrzeugkontur bzw. die Oberfläche der Heckklappe (6) hinsichtlich der Höhe und/oder des Winkels ausgestellt ist, um während der Fahrt des Kraftfahrzeugs (1) eine Abtriebswirkung und/oder Bremswirkung und/oder Aerodynamikverbesserung zu erzielen, wobei die Verstellung der Verstellkinematikeinrichtung (20) über ansteuerbare Antriebsmittel erfolgt, und wobei die Verstellkinematikanordnung (20) zumindest eine Verstellkinematikeinheit (20A) umfasst, die aus einer ersten Verstellkinematik (24) und einer wirkverbunden damit gekoppelten zweiten Verstellkinematik (26) gebildet wird, wobei die erste Verstellkinematik (24) als Viergelenk ausgebildet und zur Einstellung einer Ausstellhöhe und die zweite Verstellkinematik (26) als Viergelenk ausgebildet und zur Einstellung eines Ausstellwinkels ausgebildet ist und eine Verstellung des Spoilers (12) eine überlagerte kinematische Verstellbewegung der ersten und zweiten Verstellkinematik (24, 26) ist, und wobei die erste Verstellkinematik über einen Elektromotor (60) als Antriebsmittel verschwenkbar ist (24) und wobei die erste Verstellkinematik (24) zumindest eine ortsfest gelagerte Schwenkachse (S1) umfasst, und wobei die erste Verstellkinematik (24) einen ersten Schwenklenker (30) mit einem ersten Endbereich (30a) und einem zweiten Endbereich (30b), einen Koppellenker (32), der in einem mittleren Bereich gekröpft ausgebildet ist, mit einem ersten Endbereich (32a), einem zweiten Endbereich (32b) und einem im mittleren Bereich ausgebildeten Anbindungsbereich (32c), einen zweiten Schwenklenker (34) mit einem ersten Endbereich (34a) und einem zweiten Endbereich (34b) umfasst, und wobei die zweite Verstellkinematik (26) über einen separat ansteuerbaren Elektromotor (61) als Antriebsmittel verschwenkbar ist, und wobei die zweite Verstellkinematik (26) eine ortsfest gelagerte Schwenkachse (S6) umfasst, , **dadurch gekennzeichnet, dass** die ortsfest gelagerte Schwenkachse (S1) über den Elektromotor (60) verschwenkbar ist und dass die ortsfest gelagerte Schwenkachse (S6) über den Elektromotor (61) verschwenkbar ist, und dass die zweite Verstellkinematik (26) einen Zweischlag (50) mit einem ersten Zweischlaglenker (52) mit einem ersten Endbereich (52a) und einem zweiten Endbereich (52b) und einen zweiten Zweischlaglenker (54) mit einem ersten Endbereich (54a) und einem zweiten Endbereich (54b) und ein Lenkhebelelement (56) mit einem ersten Endbereich (56a) und einem Anbindungsbereich (56b) aufweist, wobei der erste Zweischlaglenker (52) über seinen zweiten Endbereich (52b) schwenkbeweglich um eine Schwenkachse (S5) an dem ersten Endbereich 54a des zweiten Zweischlaglenkers (54) angebunden und über seinen ersten Endbereich (52a) über ein lagerfest ausgeführtes Schwenklager (58) schwenkbeweglich um die Schwenkachse (S6) gelagert ist, welches unmittelbar oder mittels eines Lagerbauteils an der Heckklappe (6) angebunden ist, und wobei der zweite Zweischlaglenker (54) über seinen zweiten Endbereich (54b) schwenkbeweglich um eine Schwenkachse (S7) an dem ersten Endbereich (56a) des Lenkhebelelements (56) gelagert und über seinen Anbindungsbereich (56b) mit dem zweiten Endbereich (32b) des Koppellenkers (32) schwenkbeweglich um eine Schwenkachse (S8) wirkverbunden gekoppelt ist und wobei das Lenkhebelelement (56) über seinen Anbindungsbereich (56b) an einer Unterseite (15) des Spoilers (12) fest angebunden ist.

2. Strömungsleitvorrichtung (10) eines Kraftfahrzeugs (1), nach Anspruch 1, **dadurch gekennzeichnet, dass** die Verstellkinematikanordnung (20) zwei in Fahrzeugquerrichtung voneinander beabstandet angeordnete Verstellkinematikeinheiten (20A, 20B) umfasst, die spiegelsymmetrisch aufgebaut sind.

3. Strömungsleitvorrichtung (10) eines Kraftfahrzeugs (1), nach Anspruch 1 oder 2, **dadurch gekennzeichnet, dass** der erste Schwenklenker (30) an seinem ersten Endbereich (30a) über ein Schwenklager (40) schwenkbeweglich um die Schwenkachse (S1) gelagert ist, wobei das Schwenklager (40) unmittelbar oder mittels eines Lagerbauteils an der Heckklappe (6) angebunden ist, und über seinen zweiten Endbereich (30b) schwenkbeweglich um eine Schwenkachse (S2) an dem ersten Endbereich (32a) des Koppellenkers (32) angebunden ist, und wobei der zweite Schwenklenker (34) über seinen ersten Endbereich (34a) über ein lagerfest angeordnetes Schwenklager (42) schwenkbeweglich um eine Schwenkachse (S3) gelagert ist, wobei das Schwenklager (42) unmittelbar oder mittels eines Lagerbauteils an der Heckklappe (6) angebunden ist, und über seinen zweiten Endbereich (34b) der zweite Schwenklenker (34) schwenkbeweglich um eine Schwenkachse (S4) an dem Anbindungsbereich (32c) des Koppellenkers (32) angebunden ist.

4. Strömungsleitvorrichtung (10) eines Kraftfahrzeugs (1), nach einem der vorangehenden Ansprüche, **dadurch gekennzeichnet, dass** die Elektromotoren (60, 61) selbsthemmend ausgeführt sind.

5. Strömungsleitvorrichtung (10) eines Kraftfahrzeugs (1), nach einem der vorangehenden Ansprüche, **dadurch gekennzeichnet, dass** die Elektromotoren (60, 61) mit einer separaten Bremseinheit ausgeführt sind.

6. Strömungsleitvorrichtung (10) eines Kraftfahrzeugs (1), nach einem der vorangehenden Ansprüche, **dadurch gekennzeichnet, dass** der Spoilerdrehpunkt bei der Verstellbewegung ausgehend von der Ruhestellung bis in eine der möglichen Funktionsstellungen sich auf dem Koppellenker (32) der ersten Verstellkinematik (24) befindet.

## Claims

1. Flow guidance device (10) of a motor vehicle (1), comprising a spoiler (12) fastened to a tailgate (6) of the motor vehicle, and an adjusting kinematics device (20) for adjusting the spoiler (12) between a rest position, in which the spoiler (12) is arranged flush with the tailgate (6), and at least one functional position, **In** which the spoiler is deployed beyond the vehicle contour or the surface of the tailgate (6) with regard to the height and/or angle in order to achieve a downforce effect and/or braking effect and/or aerodynamic improvement during travelling of the motor vehicle (1), wherein the adjustment of the adjusting kinematics device (20) is carried out via actuable drive means, and wherein the adjusting kinematics arrangement (20) comprises at least one adjusting kinematics unit (20A) which is formed from a first adjusting kinematics system (24) and a second adjusting kinematics system (26) operatively coupled to the former, wherein the first adjusting kinematics system (24) is formed as a four-joint and for the adjustment of an exhibition height and the second adjusting kinematics (26) is formed as a four-bar linkage and is formed for the adjustment of a deployment angle, and an adjustment of the spoiler (12) is a superimposed kinematic adjustment movement of the first and second adjusting kinematics systems (24, 26), and wherein the first adjustment kinematics system can be swivelled via an electric motor (60) as a drive means (24), and wherein the first adjustment kinematics system (24) comprises at least one immovably mounted swivel axis (S1), and wherein the first adjustment kinematics system (24) comprises a first swivel link (30) having a first end region (30a) and a second end region (30b), a coupling link (32) which is of bent configuration in a central region, with a first end region (32a), a second end region (32b) and a connecting region (32c) formed in the central region, a second swivel link (34) with a first end region (34a) and a second end region (34b), and wherein the second adjustment kinematics system (26) can be swivelled via a separately actuable electric motor (61) as a drive means, and wherein the second adjustment kinematics system (26) comprises a immovably mounted swivel axis (S6), **characterized in that** that the fixed-mounted swivel axis (S1) can be swivelled via the electric motor (60), and **in that** the immovably mounted swivel axis (S6) can be swivelled via the electric motor (61), and **in that** the second adjustment kinematics system (26) has a double crank (50) with a first double crank arm (52) with a first end region (52a) and a second end region (52b), and a second double crank arm (54) with a first end region (54a) and a second end region (54b), and a drop arm element (56) with a first end region (56a) and a connecting region (56b), wherein the first double crank arm (52) is connected via its second end region (52b) in a swivellingly movable manner around a swivel axis (S5) to the first end region 54a of the second double crank arm (54) and is mounted in a swivellingly movable manner around the swivel axis (S6) via its first end region (52a) via a bearing-mounted swivel bearing (58), which is connected directly or by means of a bearing component to the tailgate (6), and wherein the second double crank arm (54) is mounted via its second end region (54b) in a swivellingly movable manner around a swivel axis (S7) at the first end region (56a) of the drop arm element (56) and is coupled in an operatively connected manner via its connecting region (56b) to the second end region (32b) of the coupling link (32) in a pivotally movable manner around a swivel axis (S8), and wherein the drop arm element (56) is firmly attached via its connecting region (56b) to a bottom side (15) of the spoiler (12).

2. Flow guidance device (10) of a motor vehicle (1), according to Claim 1, **characterized in that** the adjusting kinematics arrangement (20) comprises two adjusting kinematics units (20A, 20B) which are arranged spaced apart from each other in the vehicle transverse direction and are of mirror-symmetrical construction.

3. Flow guidance device (10) of a motor vehicle (1), according to Claim 1 or 2, **characterized in that** the first swivel link (30) is mounted on its first end region (30a) via a swivel bearing (40) in a swivellingly movable manner around the swivel axis (S1), wherein the swivel bearing (40) is connected directly or by means of a bearing component to the tailgate (6), and is connected via its second end region (30b) in a swivellingly movable manner around a swivel axis (S2) to the first end region (32a) of the coupling link (32), and wherein the second swivel link (34) is mounted in a swivellingly movable manner around a swivel axis (S3) via its first end region (34a) via a swivel bearing (42) arranged in a bearing-mounted manner, wherein the swivel bearing (42) is connected directly or by means of a bearing component to the tailgate (6), and the second swivel link (34) is connected via its second end region (34b) to the connecting region (32c) of the coupling arm (32) in a swivellingly movable manner around a swivel axis (S4).

4. Flow guidance device (10) of a motor vehicle (1), according to one of the preceding claims, **characterized in that** the electric motors (60, 61) are of self-locking design.

5. Flow guidance device (10) of a motor vehicle (1), according to one of the preceding claims, **characterized in that** the electric motors (60, 61) are designed with a separate braking unit.

6. Flow guidance device (10) of a motor vehicle (1), according to one of the preceding claims, **characterized in that** the spoiler pivot point, during the adjustment movement starting from the rest position as far as one of the possible functional positions, is located on the coupling link (32) of the first adjustment kinematics system (24).

## Revendications

1. Dispositif de guidage d'écoulement (10) d'un véhicule automobile (1), comprenant déflecteur (12) fixé sur un hayon arrière (6) du véhicule automobile, ainsi qu'un appareil cinématique de réglage (20) pour régler le déflecteur (12) entre une position de repos, dans laquelle le déflecteur (12) est agencé à fleur de surface dans le hayon arrière (6), et au moins une position fonctionnelle, dans laquelle le déflecteur est déployé au-dessus du contour de véhicule ou de la surface du hayon arrière (6) en ce qui concerne la hauteur et/ou l'angle, afin d'obtenir un effet d'appui et/ou un effet de freinage et/ou une amélioration de l'aérodynamique pendant le trajet du véhicule automobile (1), le réglage de l'appareil cinématique de réglage (20) s'effectuant par l'intermédiaire de moyens d'entraînement commandables, et l'agencement cinématique de réglage (20) comprenant au moins une unité cinématique de réglage (20A), qui est formée d'une première cinématique de réglage (24) et d'une deuxième cinématique de réglage (26) couplée à celle-ci en liaison active, la première cinématique de réglage (24) étant réalisée sous forme de quadrilatère articulé et pour le réglage d'une hauteur de déploiement et la deuxième cinématique de réglage (26) étant réalisée sous forme de quadrilatère articulé et étant réalisée pour le réglage d'un angle de déploiement, et un réglage du déflecteur (12) étant un mouvement de réglage cinématique superposé des première et deuxième cinématiques de réglage (24, 26), et la première cinématique de réglage pouvant pivoter (24) par l'intermédiaire d'un moteur électrique (60) en tant que moyen d'entraînement, et la première cinématique de réglage (24) comprenant au moins un axe de pivotement (S1) monté de manière fixe, et la première cinématique de réglage (24) comprenant un premier bras pivotant (30) avec une première zone d'extrémité (30a) et une deuxième zone d'extrémité (30b), un bras de couplage (32), qui est réalisé coudé dans une zone centrale, avec une première zone d'extrémité (32a), une deuxième zone d'extrémité (32b) et une zone d'attache (32c) réalisée dans la zone centrale, un deuxième bras pivotant (34) avec une première zone d'extrémité (34a) et une deuxième zone d'extrémité (34b), et la deuxième cinématique de réglage (26) pouvant pivoter par l'intermédiaire d'un moteur électrique (61) commandable séparément en tant que moyen d'entraînement, et la deuxième cinématique de réglage (26) comprenant un axe de pivotement (S6) monté de manière fixe, **caractérisé en ce que** l'axe de pivotement (S1) monté de manière fixe peut être pivoté par l'intermédiaire du moteur électrique (60) et **en ce que** l'axe de pivotement (S6) monté de manière fixe peut être pivoté par l'intermédiaire du moteur électrique (61), et **en ce que** la deuxième cinématique de réglage (26) présente un mécanisme à deux positions (50) avec un premier bras à deux positions (52) avec une première zone d'extrémité (52a) et une deuxième zone d'extrémité (52b) et un deuxième bras à deux positions (54) avec une première zone d'extrémité (54a) et une deuxième zone d'extrémité (54b) et un élément de levier de direction (56) avec une première zone d'extrémité (56a) et une zone d'attache (56b), le premier bras à deux positions (52) étant attaché par l'intermédiaire de sa deuxième zone d'extrémité (52b) de manière à pouvoir pivoter autour d'un axe de pivotement (S5) à la première zone d'extrémité 54a du deuxième bras à deux positions (54) et étant monté par l'intermédiaire de sa première zone d'extrémité (52a) de manière à pouvoir pivoter autour de l'axe de pivotement (S6) par l'intermédiaire d'un palier de pivotement (58) conçu de manière fixe, lequel est attaché directement ou au moyen d'un composant de palier au hayon arrière (6), et le deuxième bras à deux positions (54) étant monté par l'intermédiaire de sa deuxième zone d'extrémité (54b) de manière à pouvoir pivoter autour d'un axe de pivotement (S7) sur la première zone d'extrémité (56a) de l'élément de levier de direction (56) et étant couplé en liaison active par l'intermédiaire de sa zone d'attache (56b) à la deuxième zone d'extrémité (32b) du bras de couplage (32) de manière à pouvoir pivoter autour d'un axe de pivotement (S8), et l'élément de levier de direction (56) étant attaché de manière fixe à un côté inférieur (15) du déflecteur (12) par l'intermédiaire de sa zone d'attache (56b).

2. Dispositif de guidage d'écoulement (10) d'un véhicule automobile (1), selon la revendication 1, **caractérisé en ce que** l'agencement de cinématique de réglage (20) comprend deux unités de cinématique de réglage (20A, 20B) agencées à distance l'une de l'autre dans la direction transversale du véhicule, qui sont construites de manière symétrique.

3. Dispositif de guidage d'écoulement (10) d'un véhicule automobile (1) selon la revendication 1 ou 2, **caractérisé en ce que** le premier bras pivotant (30) est monté sur sa première zone d'extrémité (30a) de manière à pouvoir pivoter autour de l'axe de pivotement (S1) par l'intermédiaire d'un palier de pivotement (40), le palier de pivotement (40) étant attaché au hayon arrière (6) directement ou au moyen d'un composant de palier, et étant attaché par l'intermédiaire de sa deuxième zone d'extrémité (30b) à la première zone d'extrémité (32a) du bras de couplage (32) de manière à pouvoir pivoter autour d'un axe de pivotement (S2), et le deuxième bras pivotant (34) étant monté par l'intermédiaire de sa première zone d'extrémité (34a) de manière à pouvoir pivoter autour d'un axe de pivotement (S3) par l'intermédiaire d'un palier de pivotement (42) agencé de manière fixe, le palier de pivotement (42) étant attaché au hayon arrière (6) directement ou au moyen d'un composant de palier, et, par l'intermédiaire de sa deuxième zone d'extrémité (34b), le deuxième bras pivotant (34) étant attaché à la zone d'attache (32c) du bras de couplage (32) de manière à pouvoir pivoter autour d'un axe de pivotement (S4).

4. Dispositif de guidage d'écoulement (10) d'un véhicule automobile (1) selon l'une quelconque des revendications précédentes, **caractérisé en ce que** les moteurs électriques (60, 61) sont conçus de manière autobloquante.

5. Dispositif de guidage d'écoulement (10) d'un véhicule automobile (1) selon l'une quelconque des revendications précédentes, **caractérisé en ce que** les moteurs électriques (60, 61) sont conçus avec une unité de freinage séparée.

6. Dispositif de guidage d'écoulement (10) d'un véhicule automobile (1) selon l'une quelconque des revendications précédentes, **caractérisé en ce que** le point de rotation du déflecteur se trouve sur le bras de couplage (32) de la première cinématique de réglage (24) lors du mouvement de réglage à partir de la position de repos jusqu'à l'une des positions fonctionnelles possibles.
